# EUROPEAN PATENT APPLICATION

(11) **EP 2 402 620 A1**
(43) Date of publication of application: **04.01.2012**
(21) Application number: 11171741.9
(22) Date of filing: 28.06.2011
(51) Int. Cl.: F16B 35/04, F16B 35/06

(54) **Clinch bolt**

(30) Priority: 30.06.2010 JP 2010148542
(71) Applicant: Pias Sales Co., Ltd., Osaka (JP)
(72) Inventor: Tamaki, Tomo, Suminoe-ku, Osaka (JP)
(74) Representative: Price, Paul Anthony King

(57) **Abstract**

A clinch bolt (1) has a screw shaft portion (2) which is inserted into an aperture (11) previously formed in a metal plate (10) and is locked by caulking to the metal plate (10). A plurality of protrusions (4) and depressions (5) are alternately peripherally disposed on a neck shaft portion directly below a head portion (3) disposed at one end of a screw shaft portion (2), and each projection (4) is configured in that an end (4b) at the screw shaft portion (2) side is larger in diameter than an end (4a) at the head portion (3) side. The aperture (11) formed in the metal plate (10) is configured such that the hole diameter thereof is a little larger than the maximum diameter of protrusions (4), and only the metal plate (10) at the periphery of aperture (11) is partially deformed by caulking (plastic deformation) so as to bite into protrusions (4) and depressions (5), thereby providing the clinch bolt (1) with both a resistance to twist-out and a resistance to pull-out.

## Description

The present invention relates to a clinch bolt of which the screw shaft portion thereof is insertable into an aperture previously formed in a metal plate and is lockable by caulking to the metal plate.

### [Background Art]

When a bolt is studded in a predetermined position of a metal plate of a jointing material such as a car component and building fixture, a weld bolt or a stud bolt is conventionally employed in many cases. However, this type of bolt accompanied by welding operation involves difficulty in welding on a paint-coated or metal-plated steel plate, and also, it requires time and labor before and after welding operation. Further, there is a problem such that gas generated during the welding operation gives bad influence to human body, and therefore, it is required to work out a proper bolt studding operation without welding from the viewpoint of working environment.

In order to solve such a problem, various clinch bolts of which the screw shaft portion thereof is inserted into a aperture previously formed in a metal plate and then studded and fastened by caulking to the metal plate are developed and employed. Such a clinch bolt is usually required to have a resistance to twist-out and a resistance to pull-out with respect to the metal plate to be locked by caulking.

For example, a clinch bolt having a locking function with a caulking protrusion disposed on a seat surface of the bolt head and a non-slip-off function provided at a neck shaft portion directly below the bolt head is disclosed in Patent document 1. The clinch bolt increases in outer diameter of the head portion as against the shaft diameter of the screw shaft portion, and is accompanied by problems such as limited places for installation, weight increase, and high costs.

Also, a clinch bolt with a serration disposed on the outer periphery of the neck shaft portion directly below the head portion is disclosed in Patent document 2 and Patent document 3. The clinch bolt has a locking function provided by such a method that the screw shaft portion thereof is inserted into an aperture formed in a metal plate so that the serration bites into the metal plate at the periphery of the aperture. Simultaneously, it has a non-slip-off function provided by such a method that an end portion of the screw shaft portion of the serration is compressed and deformed toward the head portion. And, as the serration disposed at the neck shaft portion is axially compressed and deformed, there is provided an actually unnecessary shaft portion between the serration and the screw shaft portion so as to avoid bad influences given to the size and shape of the screw shaft portion. Also, compressing and deforming the serration gives rise to the appearance of a shaft portion that is not needed for similar fastening. As a result, the overall length of the shaft portion including the screw shaft portion as a whole becomes unnecessarily longer.

### [Summary of the Invention]

The present invention is intended to address the problem of the conventional clinch bolt. It would be desirable to provide a clinch bolt comprising a locking function and a non-slip-off function, reducing the outer diameter of the head portion and also suppressing unnecessary increase in size of the shaft portion.

In one aspect, the present invention provides a clinch bolt of which the shaft portion thereof is inserted into a aperture previously formed in a metal plate and fastened by caulking to the metal plate, wherein a plurality of protrusions and depressions are alternately peripherally disposed at a neck shaft portion directly below the head portion disposed at one end of the screw shaft portion, and the protrusion is configured in that the end of the screw shaft portion side is formed larger in diameter than the end of the head portion side, and the aperture formed in the metal plate is configured in that the hole diameter is (a little) larger than the maximum diameter of the protrusion. And only the metal plate at the aperture periphery is partially deformed by caulking (plastic deformation) so as to bite into the protrusion and the depression, thereby providing the clinch bolt with both of a locking function and a non-slip-off function.

The maximum diameter of the protrusion is preferable to be equal to or larger than the outer diameter of the screw shaft portion.

The protrusion is preferably specifically configured in that the outer surface thereof is tapered, outwardly widening toward the end of the screw shaft portion from the end of the head portion, such that the end of the screw shaft portion is larger in diameter than the end of the head portion side.

The clinch bolt of the preferred embodiment has a simple structure such that a plurality of protrusions and depressions are alternately peripherally disposed at a neck shaft portion directly below the head portion thereof, and as to the protrusion, the end of the screw shaft portion is larger in diameter than the end of the head portion side. The screw shaft portion is inserted into an aperture formed in a metal plate, and only the metal plate at the aperture periphery is partially deformed by caulking (plastic deformation) so as to bite into the protrusion and depression, thereby providing the clinch bolt with both a resistance to twist-out and a resistance to pull-out. Accordingly, it is possible to obtain a clinch bolt having both a resistance to twist-out and a resistance to pull-out, reducing the outer diameter of the head portion and suppressing unnecessary increase in size of the shaft portion.

Also, only the peripheral portion of the aperture in the metal plate is deformed by caulking (plastic deformation), while the protrusion and depression of the neck shaft portion are not deformed by caulking. Therefore, the caulking work can be easily performed and it is possible to sufficiently ensure the strength of the neck shaft portion.

### [Brief Description of the Drawings]

Fig. 1 is a front view of a clinch bolt of a first embodiment of the present invention.
Fig. 2 is a plan view of the clinch bolt as viewed from the screw shaft portion.
Fig. 3 is a perspective view of a main portion of the clinch bolt.
Fig. 4 is a profile front view showing a state of preparation for caulking process of the clinch bolt.
Fig. 5 is a profile front view showing a state of caulking in caulking process of the clinch bolt.
Fig. 6 is a profile front view showing a state of the clinch bolt fastened by caulking to a metal plate.
Fig. 7 is a plan view of Fig. 6 as viewed from the screw shaft portion.
Fig. 8 is a sectional view along the 8 - 8 line of Fig. 7.
Fig. 9 is a sectional view along the 9 - 9 line of Fig. 7.

### [Description of the Preferred Embodiment]

The preferred embodiment of the present invention will be described in detail in the following with reference to the drawings.

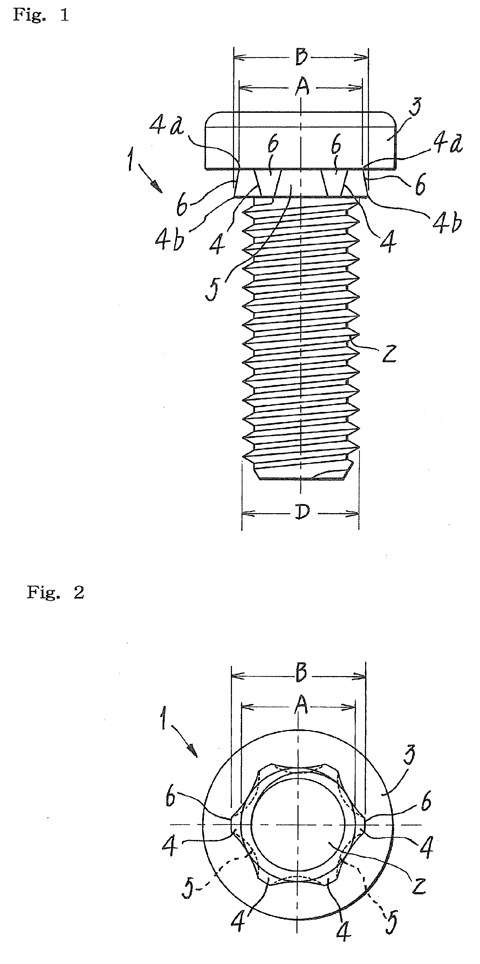

Fig. 1 to Fig. 3 show clinch bolt 1 of a first embodiment of the present invention. Clinch bolt 1 is configured in that a plurality of protrusions 4 and depressions 5 are alternately peripherally disposed at a neck portion directly below head portion 3 disposed at one end of screw shaft portion 2. Each protrusion 4 is configured in that outer surface 6 thereof is tapered, outwardly widening toward the end 4b of screw shaft portion 2 from the end 4a of head portion 3, and outer diameter B of end 4b is larger than outer diameter A of end 4a, and outer diameter B of end 4b is largest. Outer diameter B of end 4b is a little larger than outer diameter D of screw shaft portion 2 in the embodiment shown, but it is allowable to be equal to outer diameter D of screw shaft portion 2. On the other hand, depression 5 is formed in arcuate concavity.

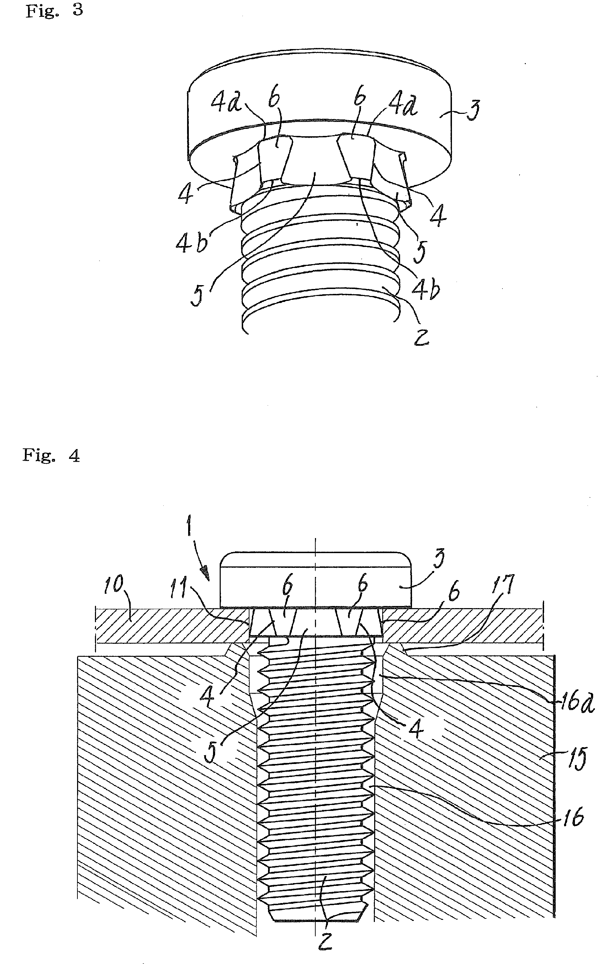

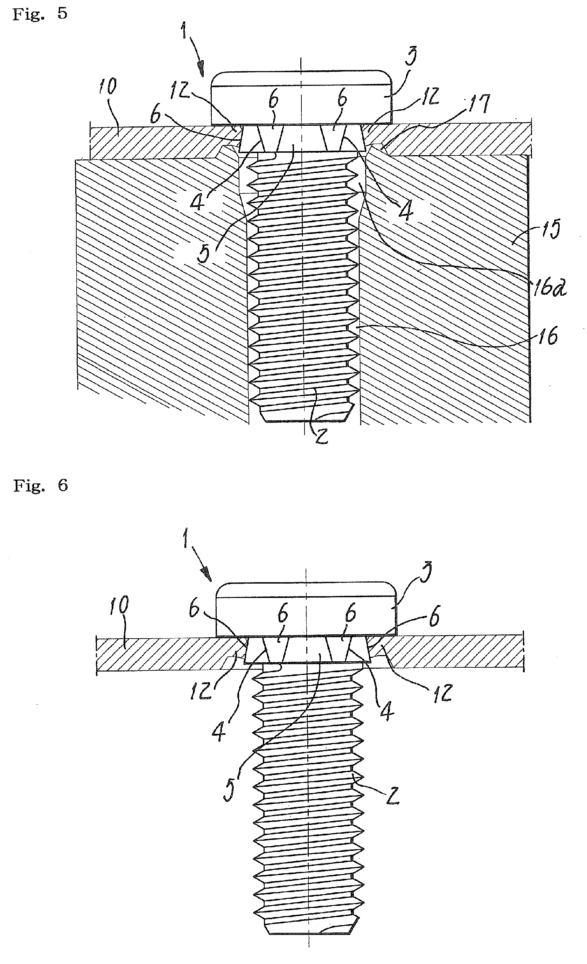

Fig. 4 and Fig. 5 show a caulking process in which clinch bolt 1 of the first embodiment of the present invention having the configuration described is fastened by caulking to metal plate 10.

Aperture 11 is previously formed by punching in metal plate 10. Aperture 11 is formed a little larger in diameter than outer diameter B of end 4b of screw shaft portion 2 of protrusion 4 of clinch bolt 1, that is, it is formed a little larger in diameter than the maximum diameter of protrusions 4, and screw shaft portion 2 is inserted into aperture 11, which is set in caulking die 15 in such a state that protrusion 4 and depression 5 of the neck shaft portion are in engagement with aperture 11.

Caulking die 15 has support hole 16 for supporting screw shaft portion 2 inserted therein, and in the vicinity of upper end opening of support hole 16 is formed large-diameter opening 16a that is nearly equal in diameter to outer diameter B of protrusions 4, and annular projection 17 for caulking is integrally disposed along the upper end opening periphery of large-diameter opening 16a.

As shown in Fig. 4, in a state such that clinch bolt 1 is set in metal plate 10 with screw shaft portion 2 inserted into aperture 11, screw shaft portion 2 is inserted into support hole 16 of caulking die 15, and metal plate 10 is securely abutted to annular projection 17 for caulking, thereby getting ready for caulking operation.

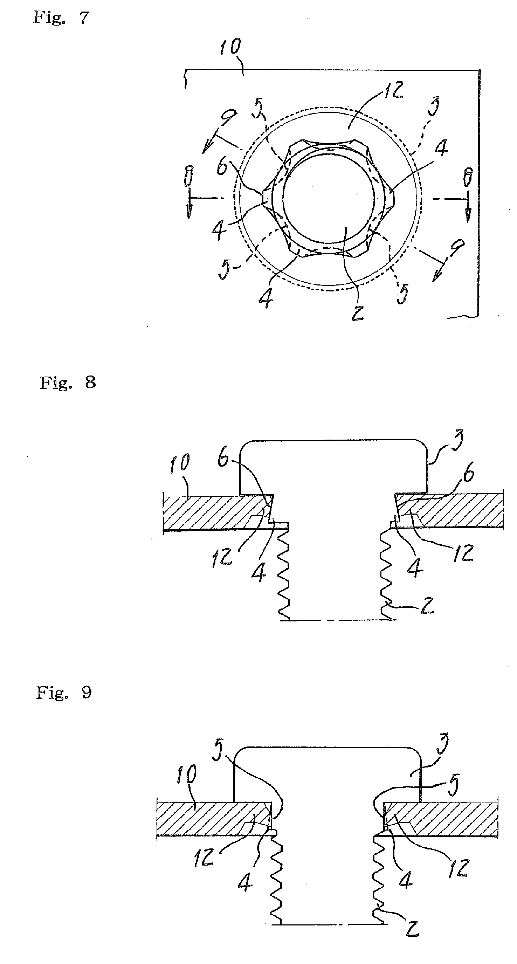

In this condition, when head portion 3 is depressed by a pressing punch not shown to press the metal plate 10 onto caulking die 15, as shown in Fig. 5, annular projection 17 for caulking is press-fitted in metal plate 10 at the peripheral portion of aperture 11 and deforms by caulking (plastic deformation) so that deformed portion 12 of metal plate 10 deformed by caulking bites into protrusion 4 and depression 5, thereby performing the operation of fastening by caulking. In this fastening by caulking operation, it brings about a state of fastening that is provided with both of a resistance to pull-out (see Fig. 8) by outer surface 6 formed on the tapered surface outwardly widening toward screw shaft 2 of protrusion 4 and a resistance to twist-out (see Fig. 9) by cooperative action between protrusion 4 and depression 5, and thereby, clinch bolt 1 is locked to metal plate 10. Since depression 5 is formed in arcuate concavity, it is easier for deformed portion 12 of metal plate 10 to bite into depression 5.

### [Description of the Reference Numerals and Signs]

- 1: Clinch bolt
- 2: Screw shaft portion
- 3: Head portion
- 4: Protrusion
- 4a: End of head portion 3 side of protrusion 4
- 4b: End of screw shaft portion 2 side of protrusion 4
- 5: Depression
- 6: Outer surface
- 10: Metal plate
- 11: Aperture
- 12: Deformed portion
- 15: Caulking die
- 16: Support hole
- 16a: Large diameter opening
- 17: Annular projection

### [Prior Art Documents]

### [Patent Documents]

[Patent document 1] Japanese Patent Unexamined Publication 2010-71401
[Patent document 2] Japanese Patent Examined Publication H5-85767
[Patent document 3] Japanese Patent Unexamined Publication S60-11710

## Claims

1. A clinch bolt of which a screw shaft portion thereof is insertable into an aperture previously formed in a metal plate and lockable by caulking to the metal plate,
wherein a plurality of protrusions and depressions are alternately peripherally disposed on a neck shaft portion directly below a head portion disposed at one end of the screw shaft portion, and
the protrusion is configured in that an end of the screw shaft portion side is larger in diameter than an end of the head portion side, such that, when the aperture formed in the metal plate is configured in that the hole diameter thereof is a little larger than the maximum diameter of the protrusion, and the metal plate at the aperture periphery is partially deformed by caulking (plastic deformation) so as to bite into the protrusion and the depression, the clinch bolt is provided with both a resistance to twist-out and a resistance to pull-out.

2. The clinch bolt of claim 1, wherein the maximum diameter of the protrusion is equal to or larger than the outer diameter of the screw shaft portion.

3. The clinch bolt of claim 1 or 2, wherein the protrusion is configured in that an outer surface thereof is tapered, outwardly widening toward the end of the screw shaft portion side from the end of the head portion side, and the end of the screw shaft portion side is formed larger in diameter than the end of the head portion side.

4. The clinch bolt of any one of claims 1 to 3, wherein the depression is formed as an arcuate concavity.
